# EUROPÄISCHE PATENTSCHRIFT

(11) **EP 1 390 240 B1**
(45) Veröffentlichungstag und Bekanntmachung des Hinweises auf die Patenterteilung: **19.10.2005**
(21) Anmeldenummer: 01965180.1
(22) Anmeldetag: 07.08.2001
(51) Int. Cl.: B60R 25/00

(54) **ELEKTRONISCHE STARTER- UND LENKUNGSVERRIEGELUNGSVORRICHTUNG FÜR EIN KRAFTFAHRZEUG**
ELECTRONIC STARTER AND STEERING LOCK DEVICE FOR A MOTOR VEHICLE
DISPOSITIF DE VERROUILLAGE ELECTRONIQUE DE DEMARREUR ET DE DIRECTION POUR UN VEHICULE AUTOMOBILE

(30) Priorität: 10.08.2000 DE 10039090
(43) Veröffentlichungstag der Anmeldung: 25.02.2004
(73) Patentinhaber: DaimlerChrysler AG, 70567 Stuttgart (DE)
(72) Erfinder: GEBER, Michael, 72574 Bad Urach (DE); POHLMANN, Andreas, 71263 Weil der Stadt (DE)
(86) Internationale Anmeldenummer: PCT/EP2001/009115
(87) Internationale Veröffentlichungsnummer: WO 2002/012032

(56) Entgegenhaltungen:
- EP-A- 0 733 521
- EP-A- 0 733 522
- EP-A- 0 733 524
- EP-A- 1 044 857
- FR-A- 2 767 767

## Beschreibung

Die Erfindung auf eine elektronische Starter- und Lenkungsverriegelungsvorrichtung für ein Kraftfahrzeug nach dem Oberbegriff des Anspruchs 1.

Derartige Vorrichtungen sind insbesondere in Automobilen gebräuchlich. Die Lenkungsverriegelungseinheit erfüllt eine Wegfahrsperrfunktion, indem sie das Lenkrad oder ein äquivalentes Fahrzeuglenkelement gegen eine Betätigung verriegelt hält, solange sich der Fahrzeugnutzer nicht über ein entsprechendes Authentikationsmittel, z.B. einen mechanischen oder elektronischen Schlüssel, als fahrberechtigt ausgewiesen hat. Die Lenkungsverriegelungseinheit ist mit der Fahrzeugstartereinheit dergestalt gekoppelt, dass sichergestellt ist, dass sie sich beim Starten des Motors in ihrem entriegelnden Zustand befindet.

Bei einer Vorrichtung dieser Art, wie sie in Fahrzeugen der Anmelderin zu finden ist, umfasst die Fahrzeugstartereinheit ein mechanisches Zündschlüssel-Zündschloss-System, bei dem das Zündschloss wie üblich durch einen fahrberechtigenden Schlüssel zwischen verschiedenen, z.B. vier Stellungen verdreht werden kann. Die Lenkungsverriegelungseinheit umfasst eine Verriegelungs-Steuereinheit und eine von dieser angesteuerte Stelleinheit und wird über eine Spannungsversorgungsleitung gespeist. Bei fehlender Spannungsbeaufschlagung befindet sie sich im entriegelnden Zustand, aus dem sie durch Spannungsbeaufschlagung in ihren verriegelnden Zustand gebracht werden kann. Die Versorgungsleitung ist über das drehbare Zündschloss geführt, das somit als eingeschleifter mechanischer Öffnerkontakt, d.h. Unterbrechungsschaltelement, fungiert, wobei es die Versorgungsleitung geschlossen hält, solange das Zündschloss noch nicht um mehr als einen vorgebbaren Schwellwertwinkel aus seiner Ausgangsstellung herausgedreht wurde, in welcher der Schlüssel ein- und ausgesteckt werden kann. Die Lenkungsverriegelungseinheit befindet sich dementsprechend in ihrem verriegelnden Zustand. Wenn das Zündschloss über den Schwellwertwinkel hinaus gedreht wird, unterbricht es die Versorgungsleitung, wodurch sichergestellt wird, dass sich die Lenkungsverriegelungseinheit beim anschließenden Starten des Fahrzeugmotors in ihrem entriegelnden Zustand befindet.

Aus der Patentschrift DE 196 34 627 C1 ist eine Ankopplung einer Lenkradverriegelungseinheit an eine elektronische Wegfahrsperre beschrieben, bei der die Lenkradverriegelungseinheit einen Riegel als Stellelement aufweist, dessen Bewegung zwischen einer Entriegelungs- und einer Verriegelungsposition mittels einer Sperreinrichtung blockiert wird, wenn die elektronische Wegfahrsperre geschärft ist. Beim Entschärfen der elektronischen Wegfahrsperre gibt die Sperreinrichtung den Riegel frei, der daraufhin in seine Entriegelungsposition bewegbar ist, z.B. durch den Kopf eines Fahrzeugschlüssels, durch einen separaten Transponder oder einen Bowdenzug. Alternativ kann das Betätigen des Riegels durch Drehen eines in ein Zündschloss eingesteckten Zündschlüssels erfolgen, wie dies z.B. aus den Offenlegungsschriften DE 44 34 587 A1 und DE 44 46 613 A1 bekannt ist.

In modernen Automobilen werden zunehmend rein elektronische Zündstartschaltereinheiten ohne mechanisches Zündschlüssel-Zündschloss-System als Fahrzeugstartereinheit verwendet, insbesondere Systeme ohne aktive Schlüsselbetätigung, d.h. sogenannte "Keyless-go"-Systeme, bei denen eine Schließanlage und eine elektronische Wegfahrsperre über drahtlose Kommunikation durch ein Authentikationselement z.B. in Form einer Chipkarte gesteuert werden, das hierzu vom Benutzer lediglich mitgeführt werden braucht, ohne dass es weiterer Handhabung desselben bedarf.

In der nicht vorveröffentlichten, älteren deutschen Patentanmeldung Nr. 199 16 966.7 der Anmelderin ist eine elektronische Starter- und Lenkungsverriegelungsvorrichtung der eingangs genannten Art beschrieben, die sich auch für solche Keyless-go-Systeme eignet und Zustandsabfrage- und Startblockiermittel umfasst, welche die Lenkungsverriegelungseinheit mit einer Zündstartschaltereinheit koppeln, den Verriegelungszustand der Lenkungsverriegelungseinheit abfragen und ein Starten des Fahrzeugmotors nur freigeben, wenn die Abfrage ergibt, dass sich die Lenkungsverriegelungseinheit in ihrem entriegelnden Zustand befindet. In einer vorteilhaften Realisierung weist die Lenkungsverriegelungseinheit eine Verriegelungs-Steuereinheit und eine von dieser angesteuerte Stelleinheit auf, und in der Zündstartschaltereinheit ist eine Zündstart-Steuereinheit angeordnet, die mit der Verriegelungs-Steuereinheit in Datenkommunikationsverbindung steht. Die Spannungsversorgung sowohl der Verriegelungs-Steuereinheit als auch der von dieser angesteuerten Stelleinheit erfolgt über eine Versorgungsleitung, die unabhängig vom Betriebszustand der Zündstartschaltereinheit an die Bordnetzversorgung angeschlossen oder derart über die Zündstartschaltereinheit geführt ist, dass die Lenkungsverriegelungseinheit abhängig von deren Betriebszustand und insbesondere von der Stellung eines in dieser vorgesehenen mechanischen Zündschlosses umsteuerbar mit der vollen Bordnetzleistung oder einer reduzierten Bordnetzleistung gespeist wird. Die reduzierte Leistung wird durch eine Strombegrenzungsfunktion erzielt und ist so gewählt, dass damit zwar noch die Verriegelungs-Steuereinheit in Betrieb gehalten werden kann, sie aber nicht mehr ausreicht, den Stellmotor der Verriegelungs-Stelleinheit zu aktivieren. Dadurch kann die Verriegelungs-Steuereinheit bleibend von der Zündstart-Steuereinheit nach dem Verriegelungszustand abgefragt werden, auch in Situationen mit eingeschalteter Zündung.

Im Fahrbetrieb sollte verhindert werden, dass die Lenkungsverriegelungseinheit versehentlich in ihren verriegelnden Zustand gerät. Eine Maßnahme hierfür besteht bei Fahrzeugen mit Automatikgetriebe darin, die Spannungsversorgung für die Lenkungsverriegelungseinheit über einen Öffnerkontakt zu führen, der dem Automatikgetriebe-Wählhebel zugeordnet ist und für eine Unterbrechung der Spannungsversorgung sorgt, wenn sich der Wählhebel nicht in der Parkstellung "P" befindet.

Druckschrift EP 0 733 524 A1 offenbart, gemäss dem Oberbegriff des Anspruchs 1, eine elektrische Diebstahlschutzeinrichtung für ein Kraftfahrzeug, bei der eine Versorgung eines Starters mit elektrischer Energie verhindert wird, wenn der Betätigungsmotor einer Blockiereinrichtung (Diebstahlsicherung) der Diebstahlschutzeinrichtung eine Entriegelungsposition nicht erreicht hat, und der Betätigungsmotor der Blockiereinrichtung bei Abwesenheit eines Schlüssels in einem Diebstahlschutzschalter über einen Schlüsselschalter mit einer Stromquelle verbunden ist. Bei in den Schlüsselschalter eingeführtem Schlüssel wird der Betätigungsmotor mit einem einem Steuerschalter zugeordneten Entriegelungskontakt verbunden. Der Entriegelungskontakt wirkt nur simultan mit dem Kontakt des Starters zusammen. Der Ver- oder Entriegelungszustand der Diebstahlsicherung wird mittels eines Zustandsbestimmungsschalters erfasst.

Der Erfindung liegt als technisches Problem die Bereitstellung einer elektronischen Starter- und Lenkungsverriegelungsvorrichtung der eingangs genannten Art zugrunde, die zum einen zuverlässig verhindert, dass die Lenkungsverriegelungseinheit im Fahrbetrieb in den verriegelnden Zustand gerät, und andererseits ein Abfragen von deren Zustand zum Starten des Fahrzeugs unabhängig von der Stellung eines Antriebsstrang-Getriebewählhebel ermöglicht.

Die Erfindung löst dieses Problem durch die Bereitstellung einer elektronischen Starter- und Lenkungsverriegelungsvorrichtung mit den Merkmalen des Anspruchs 1. Bei dieser Vorrichtung erfolgt charakteristischerweise die Spannungsversorgung für die Verriegelungs-Steuereinheit einerseits und die Verriegelungs-Stelleinheit andererseits auf unterschiedliche Weise, und zwar so, dass die Verriegelungs-Steuereinheit unabhängig vom Fahrbetriebszustand des Fahrzeugs und damit insbesondere unabhängig vom Betriebszustand der Fahrzeugstartereinheit und der Stellung eines Antriebsstrang-Getriebewählhebels bleibend an die Spannungsversorgung angeschlossen ist, während die Verriegelungs-Stelleinheit an die Spannungsversorgung über Unterbrechungsschaltmittel angeschlossen ist, die abhängig vom Betriebszustand der Fahrzeugstartereinheit und/oder von der Schaltstellung des Antriebsstrang-Getriebewählhebels umsteuerbar sind.

Diese zweigeteilte Speisung der betreffenden Komponenten der Lenkungsverriegelungseinheit gewährleistet einerseits, dass die Verriegelungs-Steuereinheit bleibend betriebsbereit ist und daher bleibend mit ihr kommuniziert werden kann, z.B. um den Verriegelungszustand der Lenkungsverriegelungseinheit abzufragen, während andererseits dafür gesorgt ist, dass die Verriegelungs-Stelleinheit in bestimmten Fahrbetriebszuständen nicht unabsichtlich aktiviert und damit in den verriegelnden Zustand gebracht werden kann. Damit kann z.B. in vorteilhafter Weise erreicht werden, dass bei einem Fahrzeug mit Automatikgetriebe ein Motorstart in der Wählhebelposition "N" möglich bleibt, auch wenn in dieser Wählhebelposition die Spannungsversorgung der Verriegelungs-Stelleinheit unterbrochen ist und der Motorstart von einer erfolgreichen Abfrage des Verriegelungszustands der Lenkungsverriegelungseinheit durch die Fahrzeugstartereinheit abhängig gemacht wird.

Weiterhin enthält die Vorrichtung Unterbrechungsschaltmittel ein der Fahrzeugstartereinheit zugeordnetes Schaltelement, dessen Schaltstellung somit vom Betriebszustand der Fahrzeugstartereinheit abhängig ist, und dazu in Reihe ein Schaltelement, dessen Schaltzustand von der Stellung eines Automatikgetriebewählhebels abhängig ist. Dadurch wird die Spannungsversorgung der Verriegelungs-Stelleinheit sowohl in gewissen Betriebszuständen der Fahrzeugstartereinheit als auch in gewissen Betriebszuständen des Automatikgetriebe-Wählhebels unterbrochen und damit die Lenkungsverriegelung im entriegelnden Zustand gehalten.

Bei einer nach Anspruch 2 weitergebildeten Vorrichtung beinhaltet die Fahrzeugstartereinheit eine Fahrzeugstart-Steuereinheit, die mit der Verriegelungs-Steuereinheit in Datenkommunikationsverbindung steht Da letztere bleibend, d.h. unabhängig vom Fahrbetriebszustand, aktiviert ist, bleibt auch die Kommunikationsverbindung zur Fahrzeugstart-Steuereinheit kontinuierlich erhalten.

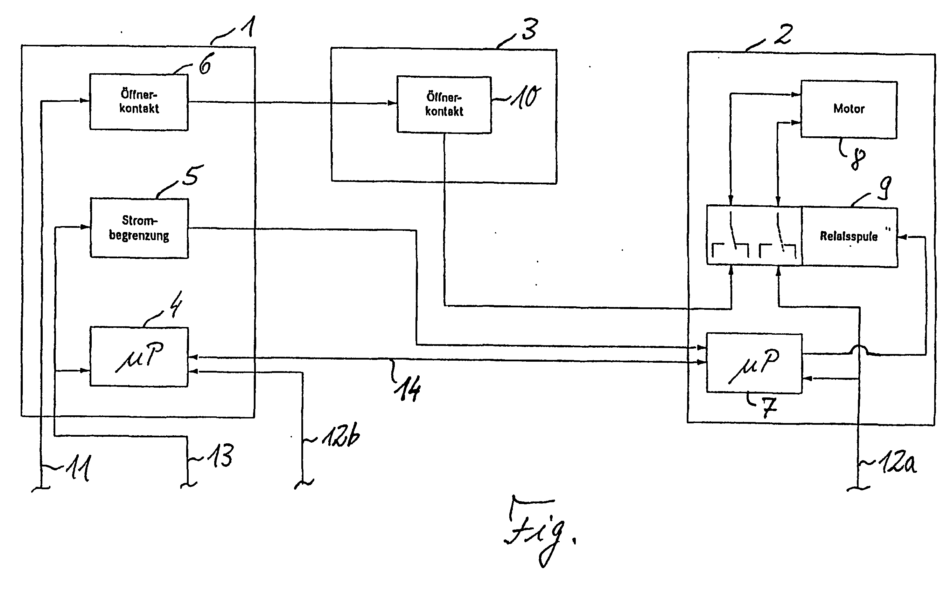

Eine vorteilhafte Ausführungsform der Erfindung ist in der Zeichnung dargestellt und wird nachfolgend beschrieben.

Die einzige Figur zeigt ein Blockschaltbild einer elektronischen Starter- und Lenkungsverriegelungsvorrichtung für ein Automobil.

Die gezeigte Starter- und Lenkungsverriegelungsvorrichtung beinhaltet eine Zündstartschaltereinheit 1, eine Lenkungsverriegelungseinheit 2, z.B. in Form einer Lenkradverriegelungseinheit, und eine Automatikgetriebe-Wählhebeleinheit 3. Die Zündstartschaltereinheit 1 umfasst eine Zündstart-Steuereinheit 4 mit einem Mikroprozessor, eine Strombegrenzungseinheit 5 und einen Öffnerkontakt 6, d.h. ein Unterbrechungsschaltelement. Die Lenkungsverriegelungseinheit 2 umfasst eine Verriegelungs-Steuereinheit 7 mit einem Mikroprozessor, einen Stellmotor 8 mit angekoppeltem, nicht gezeigtem Stellglied, wie einem Lenkrad-Verriegelungsbolzen, und eine Relaisspuleneinheit 9, über die der Stellmotor 8 von der Verriegelungs-Steuereinheit 7 gesteuert, d.h. steuerbar mit Spannung beaufschlagt werden kann. Die Wählhebeleinheit 3 beinhaltet einen Öffnerkontakt 10, der einem nicht gezeigten Automatikgetriebewählhebel derart zugeordnet ist, dass er schließt, wenn sich der Wählhebel in der Parkstellung "P" befindet, und öffnet, sobald der Wählhebel aus der Parkstellung "P" in eine andere Wählhebelstellung herausbewegt wird.

Die Stromversorgung der genannten Systemkomponenten erfolgt über ein übliches Bordnetz des Fahrzeugs mit entsprechender Batterie als Spannungsquelle. Dabei ist eine Plusleitung der Batterie, d.h. eine standardisierte "Klemme 30"-Leitung 11 über den Öffnerkontakt 6 der Zündstartschaltereinheit 1 und den dazu in Serie geschalteten Öffnerkontakt 10 der Getriebewählhebeleinheit 3 zu einem Anschluss der Relaisspule 9 geführt. Ein zweiter Relaisspulenanschluss ist an eine Masseleitung 12a, d.h. eine standardisierte "Klemme 31"-Leitung angeschlossen, die auch zu der Verriegelungs-Steuereinheit 7 geführt ist. Die Zündstart-Steuereinheit 4 ist zum einen ebenfalls an eine Masseleitung 12b und zum anderen an eine standardisierte "Klemme 30z"-Leitung 13 zur Spannungsversorgung angeschlossen, wobei ein Abzweig der "Klemme 30z"-Leitung 13 über die Strombegrenzungseinheit 5 zur Verriegelungs-Steuereinheit 7 geführt ist, so dass diese mit geeignet vorgebbarer Strombegrenzung gespeist wird. Der Stellmotor 9 der Lenkungsverriegelungseinheit 2 ist derart an die Relaisspule 9 angeschlossen, dass er gesteuert von der Verriegelungs-Steuereinheit 7 mit Batteriespannung über die Batterieplusleitung 11 beaufschlagt oder von dieser freigeschaltet und damit aktiviert bzw. deaktiviert werden kann.

Damit ist eine galvanisch getrennte Spannungsversorgung der Verriegelungs-Steuereinheit 7 einerseits und der von dieser angesteuerten Stelleinheit, d.h. insbesondere des Stellmotors 8 andererseits realisiert. Die Verriegelungs-Steuereinheit 7, d.h. der eigentliche Prozessor und die zugehörige Elektronik, wird über die zugehörige Versorgungsleitung 13 ebenso wie die Zündstart-Steuereinheit 4 permanent mit Spannung versorgt, d.h. unabhängig vom Fahrbetrieb des Fahrzeugs, insbesondere unabhängig davon, ob der Fahrzeugantriebsmotor läuft oder nicht und in welcher Stellung sich der Getriebewählhebel befindet. Hingegen werden die Schaltkontakte der Relaisspule 9 und damit der Stellmotor 8 über die in Reihe geschalteten, mechanischen Öffnerkontakte 6, 10 der Zündstartschaltereinheit 1 bzw. der Automatikgetriebe-Wählhebeleinheit 3 mit Spannung versorgt. Diese Spannungsversorgung der Verriegelungs-Stelleinheit (8, 9) ist folglich unterbrochen, wenn sich der Getriebewählhebel nicht in der Parkstellung "P" befindet und/oder wenn der Öffnerkontakt 6 der Zündstartschaltereinheit 1 geöffnet ist, d.h. die Zündung eingeschaltet ist und der Fahrzeugantriebsmotor daher läuft.

Diese Art der Spannungsversorgung der elektronischen Starter- und Lenkungsverriegelungsvorrichtung hat folgende Vorteile. Im laufenden Fahrbetrieb sorgen die beiden seriell geschalteten Öffnerkontakte 6, 10 der Zündstartschaltereinheit 1 bzw. der Getriebewählhebeleinheit 3 dafür, dass der Stellmotor 9 der Lenkungsverriegelungseinheit 2 spannungslos bleibt und dadurch verhindert wird, dass die Lenkungsverriegelungseinheit 2 versehentlich ihren verriegelnden Zustand einnimmt. Bei abgestelltem Fahrzeug und in Parkstellung "P" befindlichem Getriebewählhebel kann die Lenkungsverriegelungseinheit 2 durch ihre Verriegelungs-Steuereinheit 7 in ihren verriegelnden Zustand gesteuert werden.

Beim Starten des Fahrzeugs ist außer der Zündstart-Steuereinheit 4 auch die Verriegelungs-Steuereinheit 7 unabhängig von der Stellung der Öffnerkontakte 6, 10 betriebsbereit und kann daher von der Zündstart-Steuereinheit 4 nach dem Verriegelungszustand der Lenkungsverriegelungseinheit 2 abgefragt werden. Die Abfrage erfolgt ebenso wie der übrige Datenaustausch zwischen den beiden Steuereinheiten 4, 7 über eine zugehörige Datenleitung 14. Wenn die Abfrage erfolgreich ist, d.h. die Verriegelungs-Steuereinheit 7 meldet, dass sich die Lenkungsverriegelungseinheit 2 im entriegelnden Zustand befindet, gibt die Zündstart-Steuereinheit 4 das Anlassen des Fahrzeugantriebsmotors frei.

Da die beschriebene Abfragekommunikation zwischen den beiden Steuereinheiten 4, 7 insbesondere unabhängig davon möglich ist, in welcher Stellung sich der Getriebewählhebel befindet, kann der Antriebsmotor nicht nur in der Parkstellung "P", sondern auch in der Leerlaufstellung "N" des Getriebewählhebels gestartet werden. Andererseits verhindert die Unterbrechung der Spannungsversorgung für den Verriegelungs-Stellmotor 8 durch den Öffnerkontakt 10 der Getriebewählhebeleinheit 3, dass der Stellmotor 8 im laufenden Fahrbetrieb des Fahrzeugs das zugehörige Stellglied und damit die Lenkungsverriegelungseinheit 2 insgesamt unabsichtlich in den verriegelnden Zustand bringen kann.

## Patentansprüche

1. Elektronische Starter- und Lenkungsverriegelungsvorrichtung für ein Kraftfahrzeug, mit
- einer Lenkungsverriegelungseinheit (2) mit einer Verriegelungs-Steuereinheit (7) und einer von dieser angesteuerten Stelleinheit (8) zur Ver- und Entriegelung eines Fahrzeuglenkelementes,
- einer Fahrzeugstartereinheit (1) zum Starten und Abstellen des Kraftfahrzeugs und
- einer Spannungsversorgung (11, 13),
wobei die Verriegelungs-Steuereinheit (7) unabhängig vom Fahrbetriebszustand des Fahrzeugs bleibend an die Spannungsversorgung angeschlossen ist, während die Verriegelungs-Stelleinheit (8) an die Spannungsversorgung über Unterbrechungsschaltmittel (6, 10) angeschlossen ist, die abhängig vom Betriebszustand der Fahrzeugstartereinheit (1) umsteuerbar sind,
**dadurch gekennzeichnet, dass**
die Unterbrechungsschaltmittel (6, 10) alternativ oder zusätzlich abhängig von der Schaltstellung eines Antriebsstrang-Getriebewählhebels umsteuerbar sind und
die Unterbrechungsschaltmittel ein Zündschloss-Schaltelement (6) der Fahrzeugstartereinheit (1) und ein dazu in Reihe geschaltetes Schaltelement (10) beinhalten, das abhängig von der Stellung eines Automatikgetriebewählhebels schaltet.

2. Elektronische Starter- und Lenkungsverriegelungsvorrichtung nach Anspruch 1, weiter
**dadurch gekennzeichnet, dass**
die Fahrzeugstartereinheit (1) eine Fahrzeugstart-Steuereinheit (4) beinhaltet, die in Datenkommunikationsverbindung mit der Verriegelungs-Steuereinheit (7) steht.

## Claims

1. Electronic starter and steering lock device for a motor vehicle having
- a steering lock unit (2) with a lock control unit (7) and an adjusting unit (8) controlled by said lock control unit (7) for locking and unlocking a vehicle steering element,
- a vehicle starter unit (1) for starting and stopping the motor vehicle and
- a power supply (11, 13)
wherein the lock control unit (7) is permanently connected to the power supply independently of the operational state of the vehicle while the lock adjusting unit (8) is connected to the power supply by means of interrupt switching means (6, 10) which can be reversed depending upon the operating state of the vehicle starter unit,
**characterised in that**
the interrupt switching means (6, 10) can be reversed alternatively or additionally depending upon the setting position of a drive train gear selector lever and
the interrupt switching means contain an ignition lock switching element (6) of the vehicle starter unit (1) and a switching element (10) which is switched in series therewith and which switches depending upon the position of an automatic gear selector lever.

2. Electronic starter and steering lock device according to claim 1,
further **characterised in that**
the vehicle starter unit (1) contains a vehicle start control unit (4) which has a data communication connection to the lock control unit (7).

## Revendications

1. Dispositif électronique de verrouillage de direction et de démarreur pour un véhicule automobile, avec
- une unité de verrouillage de direction (2) avec une unité de commande de verrouillage (7) et une unité de réglage (8) commandée par celle-ci pour le verrouillage et le déverrouillage d'un élément de direction de véhicule,
- une unité de démarreur de véhicule (1) pour le démarrage et l'arrêt du véhicule automobile et
- une alimentation en courant (11, 13),
l'unité de commande de verrouillage (7) étant raccordée en permanence à l'alimentation en courant indépendamment de l'état de fonctionnement du véhicule, tandis que l'unité de réglage du verrouillage (8) est raccordée à l'alimentation en courant par l'intermédiaire de dispositifs de commutation de rupture (6, 10) qui peuvent être inversés en fonction de l'état de fonctionnement de l'unité de démarreur (1) du véhicule,
**caractérisé en ce que**
les dispositifs de commutation de rupture (6, 10) peuvent être inversés alternativement ou en sus en fonction de la position de commutation d'un sélecteur de transmission à phase d'entraînement, et les dispositifs de commutation de rupture contiennent un élément de commutation de serrure de contact (6) de l'unité de démarreur (1) de véhicule et un élément logique (10) monté en série qui commute en fonction de la position d'un sélecteur de transmission automatique.

2. Dispositif électronique de verrouillage de direction et de démarreur selon la revendication 1,
**caractérisé en outre en ce que**
l'unité de démarreur (1) de véhicule contient une unité de commande de démarrage de véhicule (4) qui est en communication de données avec l'unité de commande de verrouillage (7).
